# EUROPEAN PATENT APPLICATION

(11) **EP 4 484 156 A1**
(43) Date of publication of application: **01.01.2025**
(21) Application number: 23382649.4
(22) Date of filing: 26.06.2023
(51) Int. Cl.: B32B 7/02, B32B 27/08, B32B 27/30, B32B 27/32

(54) **ORIENTED FILMS INCLUDING POLYETHYLENE**

(71) Applicant: Dow Global Technologies LLC, Midland, MI 48674 (US)
(72) Inventor: HILL, Martin Keith, 43006 Tarragona (ES); SHARMA, Rahul, Lake Jackson, 77566 (US)
(74) Representative: Elzaburu S.L.P.

(57) **Abstract**

Provided are oriented films and a process for making oriented films. The process for making the oriented film according to embodiments disclosed herein includes providing a low density polyethylene and an ethylene based copolymer, extruding the low density polyethylene in a first outer layer and the ethylene copolymer in an inner layer to form a multilayer film, and orienting the film to obtain a specific thickness in the first outer layer. The resulting oriented film can provide desirable properties such as heat seal initiation temperature and recyclability, among others.

## Description

### TECHNICAL FIELD

Embodiments of the present disclosure generally relate to oriented films, and a process for making the same.

### INTRODUCTION

Oriented films are evolving as one of the major technical solutions for packaging. The orientation of films in the machine direction (MDO), cross direction, or both directions (i.e., biaxially oriented film) can improve properties such as optics, tensile strength, stiffness, low elongation, and thermal resistance. Oriented films typically are used as a print substrate to form laminates, but demand for single film solutions continues to rise as does the demand for more downgauged, sustainable, and recyclable films made from mono-materials. A particular problem exists with oriented films and single film packaging solutions in their ability to achieve low heat seal initiation temperatures (HSIT) while maintaining other desirable properties. To orient films, extruded films are typically heated at high temperatures, for example, via passing quickly through chrome heated rollers to achieve optimal heat transfer such that the polymers in the films meet a semi-molten state for stretching. When sealant resins providing a low HSIT are extruded as an outer layer of an oriented film, a low temperature and slower manufacturing process is required due to the tendency of the film to stick to the rollers. Accordingly, there remains a strong need for oriented films that can provide a desirable heat seal initiation temperature while maintaining other properties, can deliver a single, mono-material solutions, and can be processed quickly at high temperatures for stretching.

### SUMMARY

Embodiments of the present disclosure meet the foregoing needs by providing oriented films that can achieve low heat seal initiation and can be recycle-compatible and used as a single solution.

Disclosed herein is a process for making an oriented film. The process for making the oriented film comprises: providing a low density polyethylene having a density from 0.910 to 0.940 g/cm³ and an ethylene-based copolymer having a highest peak melting temperature (Tₘ) of 105°C or less; extruding a first outer layer to have a thickness of "X" and comprise the low density polyethylene, an inner layer adjacent to the first outer layer to comprise the ethylene-based copolymer, and a second outer layer to form a film comprising at least three layers; and orienting the film in at least one direction, wherein the film is oriented at a stretch ratio of "Y," wherein the thickness "X" divided by Y is less than 0.45.

Also disclosed herein is a process for making a laminate. The process for making the laminate comprises making the oriented film according to embodiments disclosed herein and adhering the oriented film to a substrate film via an adhesive.

Also disclosed herein is an oriented film. The oriented film can be made by the process described above. The oriented film comprises a first outer layer comprising a low density polyethylene having a density from 0.910 to 0.940 g/cm³; an inner layer adjacent to the first outer layer comprising an ethylene-based copolymer having a highest peak melting temperature (Tₘ) of 105°C or less; and a second outer layer; and wherein the first outer layer has a thickness of less than 0.45 micron.

These and other embodiments are described in more detail in the Detailed Description.

### DETAILED DESCRIPTION

Aspects of the disclosed films are described in more detail below. The oriented films of the present disclosure can have a wide variety of packaging applications, including, for example, pouches, stand-up pouches, pillow pouches, bulk bags, pre-made packages, sachets, lidding films, or the like.

As used herein, the term "polymer" means a polymeric compound prepared by polymerizing monomers, whether of the same or a different type. The generic term polymer thus embraces the term homopolymer (employed to refer to polymers prepared from only one type of monomer), and the term copolymer or interpolymer. Trace amounts of impurities (for example, catalyst residues) may be incorporated into and/or within the polymer. A polymer may be a single polymer, a polymer blend, or a polymer mixture, including mixtures of polymers that are formed *in situ* during polymerization.

As used herein, the terms "polyethylene" or "ethylene-based polymer" shall mean polymers comprising a majority amount (>50 mol %) of units which have been derived from ethylene monomer. This includes polyethylene homopolymers or copolymers (meaning units derived from two or more comonomers). Common forms of polyethylene known in the art include Low Density Polyethylene (LDPE); Linear Low Density Polyethylene (LLDPE); Ultra Low Density Polyethylene (ULDPE); Very Low Density Polyethylene (VLDPE); single-site catalyzed Linear Low Density Polyethylene, including both linear and substantially linear low density resins (m-LLDPE); ethylene-based plastomers (POP) and ethylene-based elastomers (POE); Medium Density Polyethylene (MDPE); and High Density Polyethylene (HDPE). These polyethylene materials are generally known in the art; however, the following descriptions may be helpful in understanding the differences between some of these different polyethylene resins.

The term "LDPE" may also be referred to as "high pressure ethylene polymer" or "highly branched polyethylene" and is defined to mean that the polymer is partly or entirely homo-polymerized or copolymerized in autoclave or tubular reactors at pressures above 14,500 psi (100 MPa) with the use of free-radical initiators, such as peroxides (see for example US 4,599,392, which is hereby incorporated by reference). LDPE resins typically have a density in the range of 0.916 to 0.935 g/cm³.

The term "LLDPE", includes both resin made using the traditional Ziegler-Natta catalyst systems and chromium-based catalyst systems as well as single-site catalysts, including, but not limited to, substituted mono- or bis-cyclopentadienyl catalysts (typically referred to as metallocene), constrained geometry catalysts, phosphinimine catalysts & polyvalent aryloxyether catalysts (typically referred to as bisphenyl phenoxy), and includes linear, substantially linear or heterogeneous polyethylene copolymers or homopolymers. LLDPEs contain less long chain branching than LDPEs and include the substantially linear ethylene polymers which are further defined in U.S. Patent 5,272,236, U.S. Patent 5,278,272, U.S. Patent 5,582,923 and US Patent 5,733,155; the homogeneously branched linear ethylene polymer compositions such as those in U.S. Patent No. 3,645,992; the heterogeneously branched ethylene polymers such as those prepared according to the process disclosed in U.S. Patent No. 4,076,698; and/or blends thereof (such as those disclosed in US 3,914,342 or US 5,854,045). LLDPEs can be made via gas-phase, solution-phase or slurry polymerization or any combination thereof, using any type of reactor or reactor configuration known in the art.

As used herein, the term "polyethylene elastomer/plastomer" shall mean a substantially linear, or linear, ethylene/α-olefin copolymer containing homogeneous short-chain branching distribution comprising units derived from ethylene and units derived from at least one C₃-C₁₀ α-olefin comonomer, or at least one C₄-C₈ α-olefin comonomer, or at least one C₆-C₈ α-olefin comonomer. Polyethylene elastomers/plastomers have a density from 0.865 g/cm³, or 0.870 g/cm³, or 0.880 g/ cm³, or 0.890 g/ cm³ to 0.900 g/ cm³, or 0.902 g/ cm³, or 0.904 g/ cm³, or 0.909 g/ cm³, or 0.910 g/ cm³. Nonlimiting examples of polyethylene elastomers/plastomers include AFFINITY^{™} plastomers and elastomers (available from The Dow Chemical Company), EXACT^{™} plastomers (available from ExxonMobil Chemical), Tafmer (available from Mitsui), Nexlene^{™} (available from SK Chemicals Co.), and Lucene^{™} (available LG Chem Ltd.).

The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of" excludes from the scope of any succeeding recitation any other component, step or procedure, excepting those that are not essential to operability. The term "consisting of' excludes any component, step or procedure not specifically delineated or listed.

### Process for Making an Oriented Film and Oriented Film

Disclosed herein is a process for making an oriented film. The process comprises providing a low density polyethylene having a density from 0.910 to 0.940 g/cm³ and an ethylene-based copolymer having a highest peak melting temperature (Tₘ) of 105°C or less; extruding a first outer layer to have a thickness of "X" and comprise the low density polyethylene, an inner layer adjacent to the first outer layer to comprise the ethylene-based copolymer, and a second outer layer to form a film comprising at least three layers; and orienting the film in at least one direction, wherein the film is oriented at a stretch ratio of "Y," wherein the thickness "X" divided by Y is less than 0.45. In some embodiments, the film is oriented in the machine direction. In some embodiments, the film is oriented in the cross direction. In some embodiments, the film is oriented in the machine direction at a draw ratio from 4:1 to 12:1 and in the transverse direction at a draw ratio from 4:1 to 12:1. In some embodiments, the first outer layer is less than 2% of the total thickness of the film wherein the thickness of the first outer layer is calculated using the formula of X divided by Y.

The processes described above and below can be used to form the oriented film disclosed herein. The oriented film comprises at least three layers-a first outer layer, an inner layer adjacent to the first outer layer, and a second outer layer. The term "adjacent to" means there are no intervening layers between the inner layer and the first outer layer. The oriented film may comprise 4, 5, 6, 7, 8, 9, 10 or more layers and include additional layers such as a tie layer or barrier layer. The oriented film may have an A/B/C structure, where the first outer layer is "A," the inner layer is "B," and the second outer layer is "C." The oriented film according to embodiments disclosed herein can have a A/B/C/D/E structure, where A is the first outer layer, B is the inner layer, C is a filler layer, D is a tie layer, and E is the second outer layer and a barrier layer.

The oriented film comprises a first outer layer. The first outer layer, when extruded, and before orientation and stretching, has a thickness of "X." In some embodiments, the first outer layer, when extruded, and before orientation and stretching, has a thickness of less than 10.00 microns, or less than 8.00 microns, or less than 5.00 microns, or less than 3.00 microns, or less than 2.60 microns. In some embodiments, the first outer layer (after orientation) has a thickness of less than 0.45 micron, or less than 0.43 micron, or less than 0.40 micron, or less than 0.38 micron, or less than 0.35 micron, or less than 0.33 micron, or less than 0.31 microns, or less than 0.29 microns, or less than 0.27 microns, or less than 0.25 microns.

The thickness of the first outer layer after orientation depends on the extent to which the film is oriented or stretched. In some embodiments, the film is oriented in at least one direction at a stretch ratio to achieve a "calculated" thickness of less than 0.45 micron. For example, an extruded outer layer that has a thickness of 2.00 micron before orientation and stretching and that is subsequently stretched to a ratio of 5:1 will have a calculated thickness of 0.40 microns. This relationship between thickness to orientation or stretch ratio is expressed herein as thickness of "X" and a stretch ratio of "Y," wherein the stretch ratio of Y is the product of the stretch ratios in both the machine and cross direction. For example, when an extruded first outer layer has a thickness "X" of 2.00 microns before orientation and stretching, and then the film is stretched in the machine direction at 2:1 and in the cross direction of 4:1, the "Y" value is 8 (2×4) and the calculated thickness, X/Y, is 2.00 microns / 8 = 0.25 microns. The stretch ratio is greater than 1 due to the film being an oriented film. In some embodiments, the first outer layer has a calculated thickness of less than 0.45 micron, or less than 0.43 micron, or less than 0.40 micron, or less than 0.38 micron, or less than 0.35 micron, or less than 0.33 micron, or less than 0.31 microns, or less than 0.29 microns, or less than 0.27 microns, or less than 0.25 microns.

In some embodiments, the first outer layer has specific weight percent to stretch ratio relationship. For example, in some embodiments, the weight percent of the first outer layer, based on the total weight of the film, to the product of the stretch ratio is less than 0.35, or less than 0.30, or less than 0.25, or less than 0.20.

In some embodiments, the first outer layer comprises less than 10.0 wt.%, or less than 5.0 wt.%, or less than 3.0 wt.%, or less than 2.5 wt.%, or less than 2.0 wt.%, or less than 1.5 wt.% of the total film, based on the total weight of the film. In some embodiments, the first outer layer is less than 3.0% of the total thickness of the film, or less than 2.0% of the total thickness of the film, or less than 1.5% of the total thickness of the film, or less than 1.0% of the total thickness of the film, or less than 0.5% of the total thickness of the film, after orientation.

The first outer layer comprises a low density polyethylene having a density from 0.910 to 0.940 g/cm³. The low density polyethylene can have a density of a lower limit of 0.910, 0.913, 0.915, 0.918, 0.924, 0.930, 0.933, 0.935, or 0.937 g/cm³ to an upper limit of 0.915, 0.920, 0.925, 0.930, 0.935, or 0.940 g/cm³. In some embodiments, the low density polyethylene is a LDPE. In some embodiments, the low density polyethylene is a highpressure polymerized, low density polyethylene homopolymer. In other embodiments, the low density polyethylene is a LLDPE.

In some embodiments, the low density polyethylene has a highest peak melting temperature (Tₘ) greater than 105°C, greater than 110°C, greater than 115°C, or greater than 120°C.

In some embodiments, the low density polyethylene has a melt index (I₂) of 0.2 to 50.0 g/10 min, or 0.3 to 40.0 g/10 min, or 0.4 to 30.0 g/10 min, or 0.5 to 20.0 g/10 min, or 0.5 to 10 g/10 min, or 0.5 to 5.0 g/10 min.

In some embodiments, the first outer layer consists essentially of the low density polyethylene, or alternatively consists only of the low density polyethylene. In other embodiments, the first outer layer may comprise additional polymers other than the low density polyethylene. For instance, the first outer layer in some embodiments may comprise a blend of the low density polyethylene and another polymer such as a ULDPE, VLDPE, LLDPE, LDPE, MDPE, or HDPE. In some embodiments, the first outer layer of comprises at least 90 wt.% of the low density polyethylene. All individual values and subranges of at least 90 wt.% are disclosed and included herein. For example, in some embodiments, the first outer layer can comprise at least 90 wt.%, at least 95 wt.%, at least 99 wt.%, at least 99.5 wt.%, or from 90 wt.% to 100 wt.%, or from 95 wt.% to 99 wt.%, or from 90 wt.% to 99.9 wt.%, a low density polyethylene, based on the total weight of polymers in the first outer layer. In some embodiments, the first outer layer comprises at least at least 90 wt.%, at least 95 wt.%, at least 99 wt.%, at least 99.5 wt.%, or from 90 wt.% to 100 wt.%, or from 95 wt.% to 99 wt.%, or from 90 wt.% to 99.9 wt.%, ethylene-based polymers, based on the total weight of polymers in the first outer layer.

Commercially available examples of a low density polyethylene that can be used in the first outer layer include those commercially available from the Dow Chemical Company such as ELITE^{™} 5400GS, ELITE^{™} 5401 GT, DOWLEX^{™} 2045G, DOW^{™} LDPE 410E, and AGILITY^{™} EC 7000 and those commercially available from the Exxon Mobil Company such as Exceed^{™} 1018, Exceed^{™} XP 8318, and LDPE LD158BW.

The oriented film comprises an inner layer adjacent to the first outer layer. The inner layer comprises an ethylene-based copolymer having a highest peak melting temperature (Tₘ) of 105°C or less. In some embodiments, the ethylene-based copolymer has a highest peak melting temperature (Tₘ) of 100°C or less, or 95°C or less, or 90°C or less, 85°C or less. In some embodiments, the ethylene-based copolymer has a density of less than 0.905 g/cc, or less than 0.900 g/cc, or less than 0.895 g/cc, or less than 0.890 g/cc, or less than 0.888 g/cc, or in the range of from 0.855 to 0.905 g/cc, from 0.860 to 0.905 g/cc, from 0.865 to 0.905 g/cc, or from 0.880 to 0.900 g/cc, or from 0.880 to 0.895 g/cc. In some embodiments, the ethylene-based copolymer is a polyethylene elastomer/plastomer. In further embodiments, the ethylene-based copolymer is a polyethylene elastomer/plastomer having a density of less than 0.900 g/cc, or less than 0.895 g/cc. In some embodiments, the inner layer has a highest peak melting temperature (Tₘ) of 100°C or less, or 95°C or less, or 90°C or less, 85°C or less.

In some embodiments, the ethylene-based copolymer has a melt index (I₂) of less than 10.0 g/10 min, or less than 5.0 g/10 min, or less than 4.0 g/10 min, or less than 3.0 g/10 min, or less than 2.0 g/10 min.

In some embodiments, the inner layer comprises at least 70 wt.% of an ethylene-based copolymer having a highest peak melting temperature (Tₘ) of 105°C or less, based on the total weight of polymers in the inner layer. All individual values and subranges of at least 70 wt.% are disclosed and included herein. For example, in some embodiments, the inner layer can comprise at least 70 wt.%, at least 80 wt.%, at least 90 wt.%, at least 95 wt.%, at least 99 wt.%, at least 99.5 wt.%, or from 70 wt.% to 100 wt.%, 75 wt.% to 99 wt.%, 80 wt.% to 95 wt.%, or 90 to 95 wt.% of an ethylene-based copolymer, based on the total weight of polymers in the inner layer. In some embodiments, the inner layer consists essentially of or consists of ethylene-based polymers, based on the total weight of polymers in the inner layer. In some embodiments, the inner layer is void of polyolefins other than the ethylene-based copolymer.

In some embodiments, the ethylene copolymer of the inner layer is selected from the group consisting of a polyethylene plastomer/elastomer, an ethylene vinyl acetate copolymer, an ethylene acrylic acid copolymer, an ethylene methyl acrylate copolymer, or an ethylene ethyl acrylate copolymer.

In some embodiments, the inner layer comprises at least 70 wt.% of a polyethylene elastomer/plastomer that has a highest peak melting temperature (Tₘ) of 100°C or less. In such embodiments, the polyethylene elastomer/plastomer of the inner layer can have a density in the range of from 0.855 to 0.910 g/cm³. All individual values and subranges of a density of from 0.855 to 0.910 g/cm³ are disclosed and included herein; for example, the polyethylene elastomer/plastomer can have a density in the range of from 0.865 to 0.910 g/cm³, 0.865 to 0.900 g/cm³, 0.865 to 0.890 g/cm³, 0.865 to 0.880 g/cm³, 0.865 to 0.870 g/cm³, 0.870 to 0.910 g/cm³, 0.870 to 0.900 g/cm³, 0.870 to 0.890 g/cm³, 0.870 to 0.880 g/cm³, 0.880 to 0.910 g/cm³, 0.880 to 0.900 g/cm³, 0.880 to 0.890 g/cm³, 0.890 to 0.910 g/cm³, 0.890 to 0.900 g/cm³, or 0.900 to 0.910 g/cm³.

In embodiments where the inner layer comprises a polyethylene elastomer/plastomer, the polyethylene elastomer/plastomer can have a melt index (I₂) in the range of from 0.50 to 20 g/10 minutes (g/10 min). All individual values and subranges of a melt index (I₂) of from 0.50 to 20 g/10 min are disclosed and include herein; for example, the polyethylene elastomer/plastomer can have a melt index (I₂) of a lower limit of 0.50, 1.0, 2.0, 5.0, 10.0, 15, or 18 g/10 min to an upper limit of 1.0, 2.0, 5.0, 10.0, 15, 18, 19, or 20 g/10 min. Commercially available examples of polyethylene elastomers/plastomers that can be used in the inner layer include those commercially available from The Dow Chemical Company (Midland, MI) under the name AFFINITY^{™} including, for example, AFFINITY^{™} VP 8770G1, AFFINITY^{™} PF7266, AFFINITY^{™} PL 1881G and AFFINITY^{™} PF1140G.

In addition to the ethylene-based copolymer, the inner layer, in some embodiments, can further comprise at least one additional polymer and/or at least one additive. For example, the at least one additional polymer can be selected from the group of a LDPE, LLDPE, or combinations thereof in an amount of less than 30 wt.% of the inner layer. And for example, the at least one additive can be selected from the group of antioxidants, ultraviolet light stabilizers, thermal stabilizers, slip agents, antiblock agent, antistatic agents, pigments or colorants, processing aids, crosslinking catalysts, flame retardants, fillers, foaming agents, or combinations thereof in an amount of less than 30 wt.% of the inner layer. In some embodiments, the inner layer comprises from 0.1 to 10 wt.%, from 0.5 to 8 wt.%, from 1.0 to 7.5 wt.% or from 2.5 to 7.5 wt.% of additives such as a slip and antiblock masterbatch additive. In embodiments where the inner layer comprises polymers other than the ethylene-based copolymer, the highest peak melting temperature of the inner layer is 105°C or less. In some embodiments, the inner layer is at least 10 microns thick, or alternatively at least 15 microns thick, or alternatively at least 20 microns thick after orientation. In further embodiments, the inner layer is 25 to 60% of the overall thickness of the oriented film. The oriented films comprises a second outer layer. The second outer layer is not particularly limited herein. The second outer layer may comprise a low density polyethylene having the same characteristics or properties as the low density polyethylene of the first outer layer. The second outer layer have a thickness to stretch ratio similar or the same as the first outer layer. The second outer layer may comprise a LDPE, LLDPE, MDPE, HDPE, or combination. In some embodiments, the second outer layer may comprise a polyamide or polypropylene.

In some embodiments, the multilayer film comprises a tie layer and the second outer layer is a barrier layer. In such embodiments, the oriented film comprises a tie layer between the inner layer and the second outer layer.

In embodiments where a tie layer is between the inner layer and second outer layer, the second outer layer as a barrier layer can comprise an ethylene vinyl alcohol copolymer (EVOH).

Various overall thicknesses are contemplated for the oriented film. In embodiments, the second layer as a barrier layer can be 5 to 25% of the overall thickness of the multilayer film.

In embodiments where there is a tie layer between the inner layer and second outer layer, the tie layer may comprise an adhesive resin selected from the group consisting of anhydride grafted ethylene-based polymer, ethylene acid copolymer, and ethylene vinyl acetate. Examples of anhydride grafting moieties may include but are not limited to, maleic anhydride, citraconic anhydride, 2-methyl maleic anhydride, 2-chloromaleic anhydride, 2,3-dimethylmaleic anhydride, bicyclo[2,2,1]-5-heptene-2,3-dicarboxylic anhydride and 4-methyl-4-cyclohexene-1,2-dicarboxylic anhydride, bicyclo(2.2.2)oct-5-ene-2,3-dicarboxylic acid anhydride, lo-octahydronaphthalene-2,3-dicarboxylic acid anhydride, 2-oxa-1,3-diketospiro(4.4)non-7-ene, bicyclo(2.2.1)hept-5-ene-2,3-dicarboxylic acid anhydride, tetrahydrophtalic anhydride, norbom-5-ene-2,3-dicarboxylic acid anhydride, nadic anhydride, methyl nadic anhydride, himic anhydride, methyl himic anhydride, and x-methyl-bi-cyclo(2.2.1)hept-5-ene-2,3-dicarboxylic acid anhydride. In one embodiment, the anhydride grafting moiety comprises maleic anhydride.

In some embodiments, the tie layer comprises an anhydride-modified, linear low density polyethylene. In some embodiments, the anhydride-modified, linear low density polyethylene has a density in the range of from 0.860 g/cm³ to 0.935 g/cm³. All individual values and subranges of from 0.860 g/cm³ to 0.935 g/cm³ are disclosed and included herein; for example, the anhydride-modified, linear low density polyethylene can have a density in the range of from 0.875 g/cm³ to 0.935 g/cm³, 0.900 g/cm³ to 0.925 g/cm³, 0.910 g/cm³ to 0.935 g/cm³, 0.910 g/cm³ to 0.925 g/cm³, 0.915 g/cm³ to 0.935 g/cm³, or 0.920 g/cm³ to 0.930 g/cm³. In some embodiments, the anhydride-modified, linear low density polyethylene has a melt index (I₂) from 0.1 g/10 min to 50 g/10 min, or from 0.5 g/10 min to 20 g/10 min, or from 1.0 g/10 min to 10 g/10 min.

In some embodiments, the oriented film may be adhered to a substrate such as another film to form a laminate. The laminate comprises the oriented film according to embodiments disclosed herein, an adhesive, and a substrate. The adhesive can be applied to the outermost layer of the oriented film (e.g., the barrier layer in embodiments or the second outer layer in other embodiments) to act as an adhesive layer and adhere the oriented film to a substrate such as a polyethylene film. Also disclosed here in is a process for making a laminate. The process for making a laminate comprises making the oriented film according to embodiments disclosed herein and adhering the oriented film to a substrate film via an adhesive.

In some embodiments, the adhesive is a solvent based adhesive, solvent-free adhesive, or water-borne adhesive. Examples of commercially available adhesives that can be used in embodiments include those available from The Dow Chemical Company (Midland, MI) under the names ADCOTE^{™}, MOR-FREE^{™}, and ROBOND^{™}.

In some embodiments, the oriented film is a machine direction oriented film. In such embodiments, the oriented film can be a machine direction oriented (MDO) polyethylene film. In some embodiments, the oriented filmed is oriented in the machine direction at a stretch ratio from 4:1 to 12:1, or 5:1 to 10:1. An MDO film is a uniaxially oriented film. The stretching or orienting of the film is performed by way of machine direction orientation rolls, via tentering, or via intermeshing gears whereby the film is ring rolled, or otherwise incrementally stretched in the machine direction.

In other embodiments, the oriented film is biaxially oriented. In such embodiments, the oriented film can be a biaxially oriented polyethylene (BOPE) film. In embodiments in which the oriented film is a BOPE, the BOPE may be biaxially oriented using a tenter frame sequential biaxial orientation process, and may referred to as tenter frame biaxially oriented polyethylene (TF-BOPE). Such techniques are generally known to those of skill in the art. In other embodiments, the oriented film can be biaxially oriented using other techniques known to those of skill in the art based on the teachings herein, such as a double bubble orientation process. In general, with a tenter frame sequential biaxial orientation process, the tenter frame is incorporated as part of a multilayer co-extrusion line. After extruding from a flat die, the film is cooled down on a chill roll, and is immersed into a water bath filled with room temperature water. The cast film is then passed onto a series of rollers with different revolving speeds to achieve stretching in the machine direction. There are several pairs of rollers in the MD stretching segment of the fabrication line, and are all oil heated. The paired rollers work sequentially as pre-heated rollers, stretching rollers, and rollers for relaxing and annealing. The temperature of each pair of rollers is separately controlled. After stretching in the machine direction, the film web is passed into a tenter frame hot air oven with heating zones to carry out stretching in the cross direction. The first several zones are for pre-heating, followed by zones for stretching, and then the last zones for annealing.

In some embodiments, the oriented film has a cross directional draw ratio larger than its machine direction draw ratio, and the oriented film has a ratio of percent elongation at break in the machine direction to percent elongation at break in the cross direction of at least 2 to 1.

In some embodiments, the oriented film can be oriented in the machine direction at a stretch ratio of 2:1 to 6:1, or in the alternative, at a stretch ratio of 3:1 to 5:1. The oriented film, in embodiments, can be oriented in the cross direction at a stretch ratio of 2:1 to 9:1, or in the alternative, at a stretch ratio of 3:1 to 8:1. In some embodiments, the oriented film is oriented in the machine direction at a stretch ratio of 2:1 to 6:1 and in the cross direction at a stretch ratio of 2:1 to 9:1. In some embodiments, the film is oriented in the machine direction, cross direction, or both at a combined stretch ratio of at least 2:1 or more to achieve a calculated thickness of the first outer layer of less than 0.45 micron.

In some embodiments, depending for example on the end use application, the oriented film can be corona treated or printed using techniques known to those of skill in the art.

The oriented film can have a variety of thicknesses depending, for example, on the number of layers. For example, in some embodiments, the oriented film can have a thickness of from 10 to 200 microns, or alternatively, from 15 to 150 microns.

The oriented film can have superior heat seal performance than films in the prior art while also being able to be produced at higher speeds and better temperatures for stretching. In some embodiments, the oriented film has a heat seal initiation temperature (defined as the seal temperature needed to achieve 5N/15mm seal strength per ASTM F88 method) of less than 105°C, or a heat seal initiation temperature at 5N/15mm of less than 104°C. of less than 105°C.

In some embodiments, the oriented film comprises at least 90 wt.% ethylene-based polymers, or at least 95 wt.% ethylene-based polymers, or at least 97 wt.% ethylene-based polymers, or at least 99 wt.% ethylene-based polymers, or at least 99.9 wt.% ethylene-based polymers, based on the total weight of polymers in the oriented film. In some embodiments, the oriented film comprises less than 5 wt.%, or less than 3 wt.%, or less than 1 wt.% or less than 0.1 wt.% or is void of polypropylene or other polyolefins other than ethylene-based polymers, based on the total weight of polymers in the oriented film.

### Additives

It should be understood that any of the foregoing layers of the multilayer can further comprise one or more additives as known to those of skill in the art such as, for example, antioxidants, ultraviolet light stabilizers, thermal stabilizers, slip agents, antiblock agent, antistatic agents, pigments or colorants, processing aids, crosslinking catalysts, flame retardants, fillers and foaming agents. For example, in embodiments, the inner layer comprises at least one of a slip agent or antiblock agent.

### Articles

Embodiments of the present invention also provide articles formed from the oriented film and laminate described herein. Examples of such articles can include packages, flexible packages, and pouches. In some embodiments, packages of the present invention can comprise a liquid, a powder, a food product, or other items. Articles and packages of the present invention can be formed from the laminate disclosed herein using techniques known to those of skill in the art in view of the teachings herein.

### TEST METHODS

### Density

Density is measured in accordance with ASTM D792, and expressed in grams/cm³ (g/cm³).

### Melt Index (I₂)

Melt index (I₂) is measured in accordance with ASTM D-1238 at 190°C at 2.16 kg. The values are reported in g/10 min, which corresponds to grams eluted per 10 minutes.

### Heat Seal Initiation Temperature and Seal Strength

Heat Seal Initiation Temperature. To determine heat seal initiation temperature (HSIT) and seal strength, samples are sealed by a heat sealing device with opposing seal jaws. The sample width is 15mm, the dwell seal time is 0.5 seconds for thickness less than 100 microns, and the seal pressure is 2.5kg/cm2. Heat sealed samples are conditioned for 24 hours and then measured using a tensile machine, equipped with a 100 N load cell, and at a pulling speed of 500 mm/min. HSIT is reported as a minimum temperature in degrees Celsius to obtain 5 Newton (50Kg) seal strength force. Heat Seal Strength. Heat seal strength, or seal strength was measured in accordance with ASTM F88. The values are reported in N/15mm.

### Highest Peak Melting Temperature (Tm)

Differential Scanning Calorimetry (DSC) is used to measure the melting and crystallization behavior of a polymer over a wide range of temperatures. For example, the TA Instruments Q1000 DSC, equipped with an RCS (refrigerated cooling system) and an autosampler is used to perform this analysis. The instrument is first calibrated using the software calibration wizard. A baseline is obtained by heating a cell from -80 °C to 280 °C without any sample in an aluminum DSC pan. Sapphire standards are then used as instructed by the calibration wizard. Next, 1 to 2 milligrams (mg) of a fresh indium sample are analyzed by heating the standards sample to 180 °C, cooling to 120 °C at a cooling rate of 10 °C/minute, and then keeping the standards sample isothermally at 120 °C for 1 minute. The standards sample is then heated from 120 °C to 180 °C at a heating rate of 10 °C/minute. Then, it is determined that indium standards sample has heat of fusion (H_{f}) = 28.71 ± 0.50 Joules per gram (J/g) and onset of melting = 156.6 °C ± 0.5 °C. Test samples are then analyzed on the DSC instrument.

During testing, a nitrogen purge gas flow of 50 ml/min is used. Each sample is melt pressed into a thin film at about 175 °C; the melted sample is then air-cooled to room temperature (approx. 25 °C). The film sample is formed by pressing a "0.1 to 0.2 gram" sample at 175 °C at 1,500 psi, and 30 seconds, to form a "0.1 to 0.2 mil thick" film. A 3-10 mg, 6 mm diameter specimen is extracted from the cooled polymer, weighed, placed in a light aluminum pan (ca 50 mg), and crimped shut. Analysis is then performed to determine its thermal properties.

The thermal behavior of the sample is determined by ramping the sample temperature up and down to create a heat flow versus temperature profile. First, the sample is rapidly heated to 180°C, and held isothermal for five minutes, in order to remove its thermal history. Next, the sample is cooled to -40 °C, at a 10 °C/minute cooling rate, and held isothermal at -40 °C for five minutes. The sample is then heated to 150 °C (this is the "second heat" ramp) at a 10 °C/minute heating rate. The cooling and second heating curves are recorded. The cool curve is analyzed by setting baseline endpoints from the beginning of crystallization to - 20 °C. The heat curve is analyzed by setting baseline endpoints from -20 °C to the end of melt. The values determined are highest peak melting temperature (Tₘ), peak crystallization temperature (T_{c}), onset crystallization temperature (Tc onset), heat of fusion (H_{f}) (in Joules per gram), and the calculated % crystallinity for polyethylene samples using: % Crystallinity for PE = ((Hf)/(292 J/g)) × 100, and the calculated % crystallinity for polypropylene samples using: % Crystallinity for PP = ((Hf)/165 J/g)) × 100. The heat of fusion (H_{f}) and the highest peak melting temperature are reported from the second heat curve. Highest peak crystallization temperature and onset crystallization temperature are determined from the cooling curve.

### EXAMPLES

The following examples illustrate features of the present disclosure but are not intended to limit the scope of the disclosure.

### Materials Used

The following materials are included in the example films discussed below.

AGILITY^{™} EC7000, a low density polyethylene resin and LDPE having a density of 0.919 g/cm³, a melt index (I₂) of 3.9 g/10 min, and a highest peak melting temperature (Tₘ) of 110°C and commercially available from The Dow Chemical Company (Midland, MI). ELITE^{™} 5410GT, a low density polyethylene resin having a density of 0.917 g/cm³, a melt index (I₂) of 1.0 g/10 min, and a highest peak melting temperature (Tₘ) of 123°C and commercially available from The Dow Chemical Company (Midland, MI).

XZ89810.00 ("XZ"), a low density polyethylene resin having a density of 0.902 g/cm³, a melt index (I₂) of 0.85 g/10 min and commercially available from The Dow Chemical Company (Midland, MI).

ELITE^{™} 5960G1, an enhanced polyethylene resin having a density of 0.962 g/cm³ and melt index (I₂) of 0.85 g/10 min and commercially available from The Dow Chemical Company (Midland, MI).

ELITE^{™} 5940ST, an enhanced polyethylene resin having a density of 0.941 g/cm³ and melt index (I₂) of 0.8 g/10 min and commercially available from The Dow Chemical Company (Midland, MI).

AFFINITY^{™} VP 8770G1, an ethylene copolymer and polyethylene elastomer/plastomer having a highest peak melting temperature (Tₘ) of 82°C, a density of 0.885 g/cm³ and melt index (I₂) of 1.0 g/10 min, and commercially available from The Dow Chemical Company (Midland, MI).

Polybatch FSU 105 E ("FSU"), a slip/antiblock masterbatch that is commercially available from LyondellBasell.

Oriented films, designated as Inventive Examples 1-2 and Comparative Examples 1-3, are formed on a Windmoller & Holscher blown coextrusion device with layer configuration and composition as noted in Table 1 below. Comparative Examples 1 and 2 have layer wt.% as follow: 10/10/15/10/10/10/15/10/10. Comparative Example 3 has a layer wt.% as follows: 2/18/15/10/10/10/15/10/10. Inventive Examples 1 and 2 have a layer wt% as follows: 1/19/15/10/10/10/15/10/10. All films are extruded to have a thickness of 127 microns (or micrometers) before orientation. Inventive Examples 1 and 2 have a first outer layer thickness before orientation of less than 2 microns or 1.27 microns. Comparative Examples 3 has a first outer layer thickness before orientation of greater than 2 microns or 2.54 microns.

**Table 1**

| **Layer(s)** | **CE1** | **CE2** | **CE3** | **IE1** | **IE2** |
|---|---|---|---|---|---|
| 1 | ELITE 5401GT | 60 wt.% ELITE 5401 GT + 40 wt.% XZ | ELITE 5401 GT | ELITE 5401 GT | AGILITY EC7000 |
| 2 | ELITE 5401GT | ELITE 5401GT | 95 wt.% AFFINITY + 5 wt.% FSU | 95 wt. % AFFINITY + 5 wt.% FSU | 95 wt. % AFFINITY + 5 wt.% FSU |
| 3-8 | ELITE 5940ST | ELITE 5940ST | ELITE 5940ST | ELITE 5940ST | ELITE 5940ST |
| 9 | ELITE 5960G1 | ELITE 5960G1 | ELITE 5960G1 | ELITE 5960G1 | ELITE 5960G1 |

All samples are stretched at a 5.5:1 ratio in the machine direction (3.5 m/min MDO inlet to 19.2 m/min MDO outlet). No speed reduction is done during annealing. Each film is stretched in a MDO unit roller, pre-heating temperatures of rollers are 90-100-105-110°C, stretching temperature at 110°C, annealing at 95°C, to produce an oriented film. The thickness X of the first outer layer before extrusion to the 5.5 draw ratio results in a calculated thickness of less than 0.45 microns in the Inventive Films and a calculated thickness of greater than 0.45 microns in the Comparative Films.

The heat seal strength of the films is measured at a series of seal temperatures and reported in Table 2 below.

**Table 2 - HSIT of Inventive and Comparative Examples**

| **Temperatur e (°C)** | **CE1 N/15mm** | **CE2 N/15mm** | **CE3 N/15mm** | **IE1 N/15mm** | **IE2 N/15mm** |
|---|---|---|---|---|---|
| 95 | 0.760 | 0.133 | 0.119 | 0.435 | 1.891 |
| 100 | 0.140 | 0.291 | 0.240 | 4.291 | 3.807 |
| 105 | 0.359 | 0.908 | 0.649 | 5.863 | 6.595 |
| 110 | 1.174 | 2.448 | 4.968 | 6.767 | 7.986 |
| 115 | 8.501 | 8.341 | 6.868 | 11.824 | 9.086 |
| 120 | 10.442 | 9.861 | 16.463 | 18.377 | 10.476 |
| 130 | 24.731 | 24.445 | 19.741 | 23.044 | 13.849 |
| 140 | 28.39 | 30.898 | 23.224 | 23.936 | 17.571 |

Inventive Examples 1 and 2 have improved HSIT in comparison to Comparative Examples 1-3. The HSIT is less than 105°C for the Inventive Examples.

Every document cited herein, if any, including any cross-referenced or related patent or application and any patent application or patent to which this application claims priority or benefit thereof, is hereby incorporated herein by reference in its entirety unless expressly excluded or otherwise limited. The citation of any document is not an admission that it is prior art with respect to any invention disclosed or claimed herein or that it alone, or in any combination with any other reference or references, teaches, suggests or discloses any such invention. Further, to the extent that any meaning or definition of a term in this document conflicts with any meaning or definition of the same term in a document incorporated by reference, the meaning or definition assigned to that term in this document shall govern. While particular embodiments of the present invention have been illustrated and described, it would be obvious to those skilled in the art that various other changes and modifications can be made without departing from the spirit and scope of the invention. It is therefore intended to cover in the appended claims all such changes and modifications that are within the scope of this invention.

## Claims

1. A process for making an oriented film comprising:
providing a low density polyethylene having a density from 0.910 to 0.940 g/cm³ and an ethylene-based copolymer having a highest peak melting temperature (Tₘ) of 105°C or less;
extruding a first outer layer to have a thickness of "X" and comprise the low density polyethylene, an inner layer adjacent to the first outer layer to comprise the ethylene-based copolymer, and a second outer layer to form a film comprising at least three layers; and
orienting the film in at least one direction, wherein the film is oriented at a stretch ratio of "Y," wherein the thickness "X" divided by Y is less than 0.45.

2. The process of claim 1, wherein the film is oriented in the machine direction.

3. The process of claim 1, wherein the film is oriented in the cross direction.

4. The process of claim 1, wherein the film is oriented in the machine direction at a draw ratio from 4:1 to 12:1 and in the transverse direction at a draw ratio from 4:1 to 12:1.

5. The process of any proceeding claim, wherein the first outer layer is less than 2% of the total thickness of the film, wherein the thickness of the first outer layer is calculated using the formula of X divided by Y.

6. The process of any preceding claim, wherein the first outer layer is less than 2 wt.% of the film, based on the total weight of the film.

7. The process of any preceding claim, wherein the ethylene-based copolymer is a polyethylene elastomer/plastomer having a density of less than 0.900 g/cc.

8. The process of any preceding claim, wherein the oriented film comprises at least 95 wt.%, based on the total weight of polymers in the oriented film.

9. The process of any preceding claim, wherein the film has a heat seal initiation temperature (defined as the seal temperature needed to achieve 5N/15mm seal strength per ASTM F88 method) of less than 105°C.

10. A process for making a laminate comprising:
making the oriented film of claims 1-9 and adhering the oriented film to a substrate film via an adhesive.

11. An oriented film comprising:
a first outer layer comprising a low density polyethylene having a density from 0.910 to 0.940 g/cm³;
an inner layer adjacent to the first outer layer comprising an ethylene-based copolymer having a highest peak melting temperature (Tₘ) of 105°C or less; and
a second outer layer; and
wherein the first outer layer has a thickness of less than 0.45 micron.

12. The oriented film of claim 11, wherein the film is oriented in the machine direction, cross direction, or both at a combined stretch ratio of at least 2:1 or more to achieve a calculated thickness of the first outer layer of less than 0.45 micron.

13. The oriented film of claims 11-12, wherein the low density polyethylene has a highest peak melting temperature (Tₘ) of 105° C or more.

14. The oriented film of claims 11-13, wherein the low density polyethylene is a linear low density polyethylene.

15. The oriented film of claims 11-14, wherein the ethylene-based copolymer is a polyethylene elastomer/plastomer having a highest peak melting temperature (Tₘ) of 100° C or less.
